# EUROPÄISCHE PATENTSCHRIFT

(11) **EP 1 966 866 B1**
(45) Veröffentlichungstag und Bekanntmachung des Hinweises auf die Patenterteilung: **15.02.2017**
(21) Anmeldenummer: 06841137.0
(22) Anmeldetag: 22.12.2006
(51) Int. Cl.: H02H 9/00, G05B 19/02

(54) **SCHALTKREIS-ANORDNUNG MIT EXSCHUTZ**
CIRCUIT ARRANGEMENT FEATURING EXPLOSION PROTECTION
CIRCUITERIE DE COMMUTATION POURVUE D'UN DISPOSITIF DE PROTECTION CONTRE LES EXPLOSIONS

(30) Priorität: 27.12.2005 DE 102005062422; 27.12.2005 US 754233 P
(43) Veröffentlichungstag der Anmeldung: 10.09.2008
(73) Patentinhaber: VEGA Grieshaber KG, 77709 Wolfach (DE)
(72) Erfinder: GÜNTER, Klaus, 78733 Aichhalden (DE); WÖHRLE, Albert, 78733 Aichhalden (DE)
(74) Vertreter: Maiwald Patentanwalts GmbH
(86) Internationale Anmeldenummer: PCT/EP2006/012472
(87) Internationale Veröffentlichungsnummer: WO 2007/073930

(56) Entgegenhaltungen:
- EP-A- 1 503 259
- EP-A1- 1 403 832
- US-A- 6 133 822
- US-A1- 2004 111 238

## Beschreibung

### Verwandte Anmeldungen

Die vorliegende Anmeldung beansprucht die Priorität der US Provisional Patentanmeldung Nr. 60/754,233, eingereicht am 27. Dezember 2005 und der deutschen Patentanmeldung Nr. 10 2005 062 422.7, eingereicht am 27. Dezember 2005, deren Inhalte hierin durch Referenz inkorporiert werden.

### Technisches Gebiet

Die vorliegende Erfindung betrifft das allgemeine technische Gebiet der Messtechnik. Insbesondere betrifft die vorliegende Erfindung eine Schaltkreis-Anordnung, ein Feldgerät und ein Verfahren zum Betreiben einer Schaltkreis-Anordnung, bei denen ein Strombegrenzungselement außerhalb eines Nutzsignalpfades angeordnet ist.

In der Messtechnik ist es üblich, dass die sogenannten Feldgeräte, die die Prozessgrößen in elektrische Signale wandeln, über Bussysteme mit Speisegeräten bzw. Auswertegeräten verbunden sind. Es lassen sich damit die von den Feldgeräten aufgenommenen Messsignale über eine große Distanz zu den Speisegeräten übertragen. Eine heute übliche Technik, um Feldgeräte an Speisegeräte anzubinden, bietet der sog. HART^{®}-Busstandard. Über den HART^{®}-BusStandard können Messwerte, die von einem Feldgerät ermittelt wurden, sowohl analog als auch digital zu einem Speisegerät übertragen werden. Speisegeräte und Auswertgeräte können auch getrennte Geräte sein wobei, wenn es sich um eine Datenübertragung handelt, die Daten zum Auswertegerät übertragen werden. Diese Übertragung kann bei einem digitalen Bus bidirektional erfolgen.

Es kann zur Parametrierung eines Feldgeräts nötig sein, dass ein Programmiergerät an das Feldgerät angeschlossen werden soll. Da die Verdrahtung zwischen einem Feldgerät und einem Speisegerät meist fest ist, d. h. dass sie nur mit Schwierigkeiten gelöst werden kann, ist es möglich, zur Parametrierung bzw. Abfrage von Werten aus dem Feldgerät eine Parametrieranordnung parallel zu dem bestehenden fest verbundenen Bussystem anzuschließen und so auf einzelne Werte bzw. Parameter des Feldgerätes zuzugreifen.

Bei einer Ankopplung eines Programmiergeräts an das Feldgerät werden zwei Stromkreise miteinander verbunden. Aufgrund von unterschiedlichen Potentialen zwischen den Stromkreisen, kann es zu einem Ladungsausgleich zwischen den Stromkreisen kommen. Dieser Ladungsausgleich kann durch eine Gleichstromunterdrückung verhindert werden.

Eine Gleichstromunterdrückung kann jedoch nicht verhindern, dass es zu hohen kurzzeitigen Stromspitzen kommt. Diese hohen Stromspitzen können zu Beschädigungen in den gekoppelten Kreisen führten.

Außerdem können die Stromspitzen zu einem zündfahigen Funken rühren, der insbesondere zu vermeiden ist, wenn die Koppelung der beiden Kreise in einem explosionsgefährdeten Bereich eingesetzt werden soll.

Der Einbau eines Widerstandes in einer Anschlussleitung der Parametriereinrichtung an den HART^{®}-Bus verhindert heute einen zu starken Stromfluss, der ansonsten zu einem zündfahigen Funken führen kann. Mittels des Widerstandes wird der Strom auf ein ungefährliches Maß reduziert, so dass eine Funkenbildung vermieden werden kann. Allerdings wird die Signalqualität durch einen Begrenzungswiderstand beeinträchtigt.

Das Dokument EP 1 503 259 A betrifft eine passive Barriere für ein eigensicheres Kommunikationsnetzwerk, welche ein Strombegrenzungselement und einen bipolaren spannungsbegrenzenden Leiter aufweist.

Das Dokument EP 1 403 832 A1 beschreibt einen eigensicheren explosionsgeschützten Sensorschaltkreis, bei dem ein Strombegrenzungswiderstand parallel zu einer Kapazität geschaltet ist, wobei sich der Einfluss dieser parallel geschalteten Elemente bei Wesentlich höheren Frequenzen als 1kHz reduziert.

### Darstellung der Erfindung

Es ist eine Aufgabe der vorliegenden Erfindung, eine störsichere Schaltkreis-Anordnung für ein Feldgerät anzugeben.

Diese Aufgabe kann durch eine Schaltkreis-Anordnung, durch ein Feldgerät und durch ein Verfahren zum Betreiben einer Schaltkreis-Anordnung mit den Merkmalen gemäß den unabhängigen Patentansprüchen gelöst werden.

Gemäß einem exemplarischen Ausführungsbeispiel der Erfindung ist eine Schaltkreis-Anordnung für ein Feldgerät geschaffen, wobei die Schaltkreis-Anordnung einen Eingang, einen Ausgang, und zumindest ein Strombegrenzungselement aufweist, wobei die Schaltkreis-Anordnung ausgebildet ist, ein Nutzsignal entlang eines Nutzsignalpfades vom Eingang zum Ausgang zu übertragen, wobei der Eingang und der Ausgang voneinander mittels einer Gleichstrom-Trennung oder Gleichstromunterdrückung getrennt sind, und wobei das zumindest eine Strombegrenzungselement außerhalb des Nutzsignalpfades angeordnet ist. Das zumindest eine Strombegrenzungselement kann ein Kurzschlussstrombegrenzungselement sein, das die Höhe eines bei einem Kurzschluss fließenden Stromes auf ein zulässiges Maß reduziert. Insbesondere kann im Rahmen dieser Anmeldung unter einer Gleichstromunterdrückung verstanden werden, dass es für Ladungsträger im Wesentlichen keinen Weg gibt, von einem Stromkreis in einen anderen (unmittelbar benachbarten) Stromkreis zu fließen.

Das zumindest eine Strombegrenzungselement kann einen Strom derart reduzieren, dass die Schaltkreis-Anordnung, insbesondere ein Teil der Schaltkreis-Anordnung, in einem Ex-Bereich betrieben werden kann. Das Strombegrenzungselement kann daher einen Exschutz bereitstellen.

Gemäß einem Ausführungsbeispiel der vorliegenden Erfindung wird eine Parametrieranordnung mit Explosionsschutz (Exschutz) bereitgestellt, die einen Eingang und einen Ausgang aufweist. Darüber hinaus weist die Parametrieranordnung zumindest ein Strombegrenzungselement auf. Die Parametrieranordnung ist ausgebildet, ein Nutzsignal entlang eines Signalpfades vom Eingang zum Ausgang zu übertragen, wobei der Eingang und der Ausgang mittels einer Gleichstrom-Unterdrückung oder Gleichstrom-Trennung getrennt (Gleichstrom-Trennung, siehe oben) sind und wobei die zumindest eine Strombegrenzung außerhalb des Nutzsignalpfades angeordnet ist.

Mittels des zumindest einen Strombegrenzungselements kann ein Teil der Schaltkreis-Anordnung in einem explosionsgeschütztem Bereich eingesetzt werden. Der Teil der Schaltkreis-Anordnung, der in einem explosionsgeschützten Bereich verläuft, kann ein Ausgang oder eine am Ausgang angeschlossene Ausgangsleitung der Schaltkreis-Anordnung sein.

Die Begrenzung des Kurzschlussstromes kann es vermeiden, dass durch einen zu hohen Strom ein Zündfunke bei einer Ankopplung der Schaltkreis-Anordnung, beispielsweise an einen Bus, entsteht. Dabei könnte ein ungewollter Strom fließen, zum Beispiel wenn sich versehentlich die Busankoppel-Anschlüsse berühren.

Durch die Anordnung des zumindest einen Strombegrenzungselements außerhalb des Nutzsignalpfades kann vermieden werden, dass das zumindest eine Strombegrenzungselement bei der Übertragung des Nutzsignals in einem Hauptpfad das Signal beeinflusst. Trotzdem kann das zumindest eine Strombegrenzungselement, bei Auftreten eines Kurzschlussstroms, diesen Kurzschlussstrom in seiner Größe auf ein ausreichend geringes Maß begrenzen.

Die Gleichstrom-Trennung des Eingangs und des Ausgangs der Schaltkreis-Anordnung entkoppelt anschaulich den Ausgang von dem Eingang. Unterschiedliche Potentialniveaus zwischen dem Eingang und dem Ausgang können sich folglich im Wesentlichen nicht ausgleichen, wodurch ebenfalls die Entstehung von ungewollten Strömen und die Entstehung von Funken vermieden oder reduziert werden kann. Außerdem kann eine Gleichstrom- Trennung oder Gleichstromunterdrückung zu einer Filterung für Gleichstromsignale verwendet werden. Meist stellt eine Gleichstrom-Trennung eine Hürde für ein Gleichstromsignal dar. Es kann somit verhindert werden, dass sich Gleichstromsignale über eine Gleichstrom-Trennung ausbreiten.

Messgeräte werden häufig in explosionsgefährdeten Bereichen eingesetzt. Wenn beispielsweise Gasdrücke oder Flüssigkeitsstände von brennbaren Flüssigkeiten mit Messgeräten gemessen werden sollen, kann verstärkt die Gefahr einer Explosion bestehen, da sich die explosionsgefährdeten Stoffe unkontrolliert verteilen und leicht entzünden können.

Um die Gefahr von Explosionen zu reduzieren, wurden sogenannte Exschutzklassen festgelegt, die die Gefährlichkeit von durchzuführenden Arbeiten klassifizieren. Diese Exschutzklassen regeln Grenzwerte, wie beispielsweise maximal zulässige elektrische Spannungen bzw. Strömen, die im Zusammenhang mit der Messung in explosionsgefährdeten Bereichen auftreten dürfen. Zu hohe Ströme, beispielsweise Kurzschlussströme, können einen Funkenschlag erzeugen, ebenso kann es durch eine zu hohe Spannungsdifferenz zu Funkenschlägen kommen. Die Funken können im Zusammenhang mit explosionsgefährdeten Stoffen, wie beispielsweise Gasen, zu Explosionen führen. Die Gefahr von Funkenschlägen kann jedoch mittels einer Gleichstrom-Trennung bzw. von zumindest einer Strombegrenzung reduziert werden.

Gemäß einem exemplarischen Ausführungsbeispiel der Erfindung ist ein Feldgerät mit einer Schaltkreis-Anordnung mit den oben beschriebenen Merkmalen geschaffen. Im Rahmen dieser Anmeldung soll unter einem Feldgerät auch ein Messgerät, wie ein Druck oder Füllstandsmessgerät, verstanden werden.

Gemäß einem weiteren exemplarischen Ausführungsbeispiel der vorliegenden Erfindung wird insbesondere ein Messgerät mit einer Parametrieranordnung oder einer Schaltkreis-Anordnung angegeben, wobei die Schaltkreis- Anordnung die oben angegebenen Merkmale aufweist. Ein Messgerät, das eine Schaltkreis-Anordnung aufweist, kann es ermöglichen, dass zur Parametrierung des Messgerätes ein wenig aufwendiges Parametrierungsgerät eingesetzt werden kann. Ein Parametrierungsgerät, das an einem Messgerät mit der Schaltkreis-Anordnung angeschlossen wird, kann, muss aber nicht selbst eine Gleichstromunterdrückung zur Entkoppelung zweier Stromkreise aufweisen. Ein Messgerät mit der Schaltkreis-Anordnung, die als Parametrieradaptionsanordnung ausgestaltet sein kann, kann (an einem Eingang) zum Anschluss eines Parametriergerätes dienen und eine entsprechende Schnittstelle bereitstellen. Der Ausgang der Schaltkreis-Anordnung kann fest mit einem Messbus des Messgerätes verbunden sein. Dabei kann die Schaltkreis-Anordnung in dem Messgerät angeordnet sein. Gleichfalls, wie der Ausgang an einen Ex-Bereich angepasst sein kann, kann der Eingang der Schaltkreis-Anordnung zur Verwendung in einem Ex-Bereich angepasst sein.

Gemäß einem exemplarischen Ausführungsbeispiel der Erfindung ist ein Verfahren zum Betreiben einer Schaltkreis-Anordnung für ein Feldgerät bereitgestellt, wobei das Verfahren Übertragen eines Nutzsignals entlang eines Nutzsignalpfades von einem Eingang zu einem Ausgang der Schaltkreis-Anordnung, trennen des Eingangs von dem Ausgang mittels einer Gleichstromunterdrückung, und Anordnen von zumindest eines Strombegrenzungselements in der Schaltkreis-Anordnung und außerhalb des Nutzsignalpfades aufweist.

Ausführungsbeispiele der Erfindung können sowohl mittels eines Computerprogramms, d.h. einer Software, als auch mittels einer oder mehrerer spezieller elektrischer Schaltungen, d.h. in Hardware oder in beliebig hybrider Form, d.h. mittels Software-Komponenten und Hardware-Komponenten, realisiert werden.

Indem die zumindest eine Strombegrenzung außerhalb des Nutzsignals verschaltet ist, kann eine Beeinflussung durch die zumindest eine Strombegrenzung bei der Signalübertragung des Nutzsignals vermieden werden.

Da vermieden werden kann, dass in einer Anklemmschaltung ein Widerstand, der zur Stromreduzierung oder Strombegrenzung dienen kann, im Nutzsignalpfad liegt, kann auch eine negative Beeinflussung eines Nutzsignals, das über den Widerstand gelangen soll, vermieden werden.

Gemäß einem weiteren Ausführungsbeispiel der vorliegenden Erfindung wird eine Schaltkreis-Anordnung angegeben, wobei der Ausgang der Schaltkreis-Anordnung zum Anschluss an einen Bus ausgebildet ist. Durch eine derartige Gestaltung des Ausgangs kann zwischen einer Schaltkreis-Anordnung und einem Bus eine lösbare Verbindung bereitgestellt werden. Die Schaltkreis-Anordnung kann mittels eines Ausgangs, der zum Anschluss an einen Bus ausgebildet ist, während eines Messbetriebes an den Bus angekoppelt und/oder von dem Bus abgekoppelt werden. Eine Störung eines Messvorgangs oder einer anderen Übertragung auf dem Bus kann mit einem zum Anschluss an den Bus ausgebildeten Ausgang der Schaltkreis-Anordnung reduziert werden.

Gemäß einem weiteren Ausführungsbeispiel der vorliegenden Erfindung wird eine Schaltkreis-Anordnung angegeben, deren Ausgang ein HART^{®}-Bus oder ein I²C-Bus ist. Durch die Ausbildung des Ausgangs als HART^{®}-Bus oder I²C-Bus oder Feldbus kann es der Schaltkreis-Anordnung ermöglicht werden, sich an gängige Messbussysteme flexibel anzuschließen.

Gemäß einem weiteren Ausführungsbeispiel der vorliegenden Erfindung wird eine Schaltkreis-Anordnung angegeben, wobei der Ausgang der Schaltkreis-Anordnung zweidrahtig bzw. für den Anschluss eines Zweidrahtbusses ausgebildet ist. Dabei kann zweidrahtig bedeuten, dass Nutzinformationen über zwei Signalleitungen übertragen werden. Der Ausgang selbst kann mehrere Anschlüsse (auch mehr als zwei Anschlüsse) aufweisen.

In der Messtechnik kommen häufig Zweidrahtverbindungen vor. Über eine solche Zweidrahtverbindung, die als Bussystem ausgebildet sein kann, können Messsignale übertragen werden. Über diese Zweidrahtleitung kann auch die Parametrierung bzw. die Konfiguration von Feldgeräten stattfinden. Feldgeräte, die kein eigenes Bedienterminal zur Konfiguration aufweisen, sind möglicherweise über eine extern angeschlossene Schaltkreis-Anordnung mit einem Programmiergerät verbunden. Hierbei kann die zweidrahtige Ausgestaltung des Ausgangs bzw. des Interfaces der Schaltkreis-Anordnung Vorteile bieten.

Gemäß einem weiteren Ausführungsbeispiel der vorliegenden Erfindung wird eine Schaltkreis-Anordnung angegeben, wobei zumindest ein Teil der Schaltkreis-Anordnung zur Verwendung in einem Ex-Bereich ausgebildet ist. Wenn die Schaltkreis-Anordnung nicht selbst im Ex-Bereich betrieben wird, so ist es möglich, dass zumindest der Ausgang, insbesondere eine an den Ausgang angeschlossene Leitung, in einem Ex-Bereich betrieben werden kann. Um mittels der Schaltkreis-Anordnung eine Leitung in einem Ex-Bereich betreiben zu können, kann die Schaltkreis-Anordnung eine Schutzvorrichtung aufweisen. Dazu ist die Schaltkreis-Anordnung, insbesondere eine Ausgangs-Stufe der Schaltkreis-Anordnung derart ausgebildet, einen Ausgang, insbesondere eine an einem Ausgang angeschlossene Leitung in einem Ex-Bereich betreibbar zu machen.

Ex-Bereiche können speziell eingestufte Sicherheitsbereiche sein, in denen durch die Art der verwendeten Messstoffe besondere Explosionsgefahr gegeben ist.

Gemäß einem weiteren Ausführungsbeispiel der vorliegenden Erfindung wird eine Schaltkreis-Anordnung angegeben, deren Eingang ein Universal Serial Bus (USB)-Anschluss oder ein RS232 Anschluss ist.

Zur Parametrierung können PCs bzw. Laptops oder Notebooks zum Einsatz kommen. Es kann zum Anschluss an die Schnittstellen solcher Computer, aber auch an die Schnittstelle von einem PDA (Personal Digital Assistant) oder anderer Parametriergeräte vorteilhaft sein, USB bzw. RS232 Anschlüsse vorzusehen. Die Ausbildung der Schaltkreis-Anordnung mittels eines zu dem USB bzw. RS232 Standard kompatiblen Interfaces kann den Anschluss eines Computers bzw. eines Programmiergerätes an die Schaltkreis-Anordnung ermöglichen. In Verbindung mit einem entsprechend angepassten Ausgang kann die Schaltkreis-Anordnung somit eine Schnittstellenkonverter-Funktion darstellen, die die Signale der Schnittstellen untereinander wandeln kann.

Gemäß einem weiteren Ausführungsbeispiel der vorliegenden Erfindung wird eine Schaltkreis-Anordnung angegeben, bei der das Nutzsignal ein Parametriersignal für mindestens ein Feldgerät ist, das zum Beispiel ein Füllstandsmessgerät oder ein Druckmessgerät sein kann. Die Anpassung der Parametriereinrichtung an ein Füllstands- oder Druckmessgerät ermöglicht es, ein Füllstands- bzw. Druckmessgerät zu parametrieren.

Gemäß einem weiteren Ausführungsbeispiel der vorliegenden Erfindung wird eine Schaltkreis-Anordnung angegeben, bei der die Gleichstromunterdrückung mittels einer Kapazität (zum Beispiel mittels eines Kondensators, einer Kondensatorbank oder einer parasitären Kapazität) erzeugt wird. Insbesondere ist hierbei unter einer Kapazität ein Kondensator zu verstehen. Ein Kondensator kann für ein Gleichstromsignal eine Barriere darstellen, während sich Wechselsignale einer bestimmten (ausreichend hohen) Frequenz über diese Barriere hinweg ausbreiten können.

Gemäß einem weiteren Ausführungsbeispiel der vorliegenden Erfindung wird eine Schaltkreis-Anordnung angegeben, bei der das zumindest eine Strombegrenzungselement ein Widerstand, insbesondere ein Widerstand mit ohmschem Anteil, weiter insbesondere ein im Wesentlichen rein ohmscher Widerstand ist. Der Widerstand kann die Entladung einer Kapazität zeitlich verzögern. Die Ladung der Kapazität kann durch die Widerstandsbegrenzung nicht in sehr kurzer Zeit frei werden. Die Entladung der Kapazität verteilt sich über einen längeren zeitlichen Bereich. Die dabei fließenden Entladeströme können entsprechend gering sein, um Anforderungen für ein Exschutz geeignetes Gerät zu erfüllen. Funkenschläge können somit vermieden werden.

Zusätzlich zu dem Widerstand können beispielsweise Zenerdioden für eine Spannungsbegrenzung und dadurch eine Kurzschlussstrom- bzw. Entladestrombegrenzung sorgen. Im Kurzschlussfall können somit ungefährlich kleine Ströme fließen. Aufgrund der kleinen Ströme kann die Schaltkreis-Anordnung an einen Bus angeschlossen werden, der in den Ex-Bereich führt. Die Summation von zusammengeschalteten Geräten sollte dabei kleiner als der zulässige Strom bei der höchsten Spannung im Kreis sein.

Eine Spannung in einem HART^{®}-Bus System kann beispielsweise eine Spannung von 30 Volt sein. Im Kurzschlussfall kann dann beispielsweise ein Kurzschlussstrom von 131 mA fließen. Die Verwendung von Widerständen zusammen mit Zenerdioden, deren Durchbruchspannung 6 Volt beträgt, kann den Kurzschlussstrom reduzieren.

Gemäß einem weiteren Ausführungsbeispiel der vorliegenden Erfindung wird der Widerstand zwischen dem Nutzsignalpfad und einem Bezugspunkt, zum Beispiel einem elektrischen Referenzpotential, wie dem Massepotential oder der Versorgungsspannung, der Schaltkreis-Anordnung angeordnet. Dadurch wird der Pfad eines Kurzschlussstroms festgelegt. Der Kurzschlussstrom kann von dem Nutzsignalpfad getrennt abgeführt werden. Beispielsweise kann der Pfad des Nutzsignals über den Widerstand zu einem Massepotential geführt werden.

Gemäß einem weiteren Ausführungsbeispiel der Erfindung wird eine Schaltkreis-Anordnung angegeben, wobei der Nutzsignalpfad zumindest eine Diode aufweist. Bei einer Verwendung von mehreren Dioden können die Dioden in einer Serienschaltung angeordnet sein. Die Dioden können über ihre Durchlassspannung einen Arbeitspunkt der Übertragung festlegen.

Der Einsatz von drei oder mehr Dioden kann die Ausfallwahrscheinlichkeit der Funktion der Dioden erniedrigen. Dadurch können Anforderungen an Geräte, die in einem Ex-Bereich zu betreiben sind Geräte erfüllt werden. Denn selbst bei dem Ausfall von zwei Dioden kann die Sperrfunktion der Dioden durch die intakte Diode aufrecht erhalten bleiben.

Viele Fortbildungen der Erfindung wurden bezugnehmend auf die Parametrieranordnung bzw. die Schaltkreis-Anordnung beschrieben. Diese Ausgestaltungen gelten auch für das Verfahren zum Betreiben der Schaltkreis-Anordnung.

### Kurze Beschreibung der Zeichnunpen

Im Folgenden werden exemplarische Ausführungsbeispiele der vorliegenden Erfindung mit Verweis auf die Figuren beschrieben:
Fig. 1 zeigt ein Blockschaltbild einer Messanordnung mit einer angeschlossenen Parametrieranordnung gemäß einem Ausführungsbeispiel der vorliegenden Erfindung.
Fig. 2 zeigt ein detailliertes Blockschaltbild einer Messanordnung mit einer angeschlossenen Parametrieranordnung gemäß einem Ausführungsbeispiel der vorliegenden Erfindung.
Fig. 3 zeigt ein Schaltbild einer Exschutzschaltung zur Ankopplung eines Nutzsignals an einen Messbus gemäß einem Ausführungsbeispiel der vorliegenden Erfindung.

### Detaillierte Beschreibung von exemplarischen Ausführungsformen

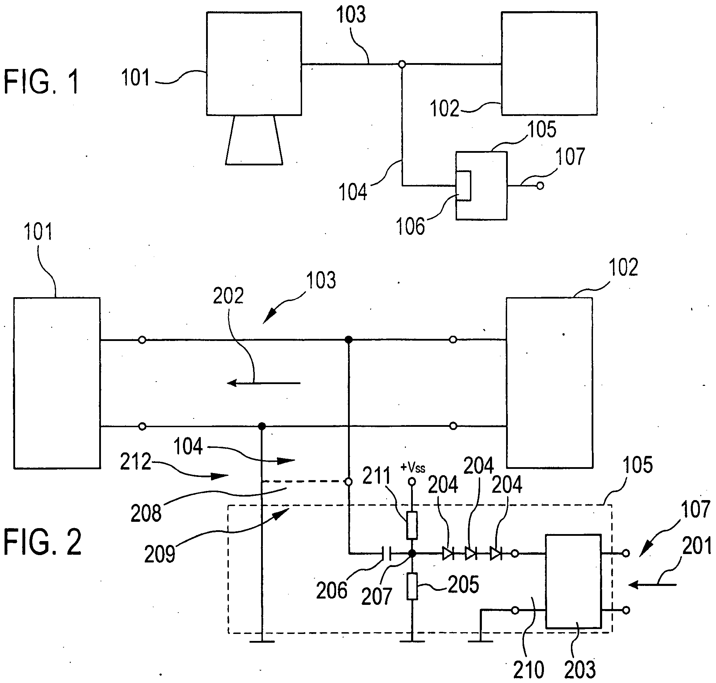

Die Darstellungen in den Figuren sind schematisch und nicht maßstäblich. In der folgenden Beschreibung der Fig. 1 bis Fig. 3 werden die gleichen Bezugsziffern für gleiche oder sich entsprechende Elemente verwendet.

Fig. 1 zeigt ein Blockschaltbild einer Messanordnung mit einer angeschlossenen Parametrieranordnung gemäß einem Ausführungsbeispiel der vorliegenden Erfindung.

Das Feldgerät 101 bzw. Messgerät 101 (zum Beispiel ein Füllstandsmessgerät oder ein Druckmessgerät) ist über einen Messgerätebus 103, beispielsweise einen Feldbus, HART^{®}-Bus oder VBUS mit einem Speisegerät 102 bzw. einem Auswerte- oder Anzeigegerät 102 verbunden. Über den Messbus 103 tauschen das Feldgerät 101 und das Speisegerät 102 bidirektional Informationen, wie zum Beispiel Messwerte, aus.

Zur Programmierung bzw. Parametrierung des Feldgerätes 101 kann ein zusätzliches Gerät an den Messgerätebus 103 angeschlossen werden. In Fig. 1 ist die Parametrieranordnung 105 über die Verbindung 104 angeschlossen, die lösbar an den Messgerätebus 103 angeschlossen ist. Dabei verläuft die Verbindung 104 zumindest teilweise in einem Bereich, für den Anforderungen einer Ex-Schutz-Klasse gelten. Durch die lösbare Verbindung kann die Parametrieranordnung 105 jederzeit angeschlossen bzw. abgeklemmt werden. Die Kommunikation zwischen dem Messgerät 101 und dem Speisegerät 102 wird durch das An- bzw. Abklemmen der Verbindung 104 nicht beeinflusst.

Bei dem An- bzw. Abschließen der Verbindung 104 an den Bus 103 kann es insbesondere durch ungewolltes Berühren von Leitungen zu Funkenüberschlägen kommen, die es besonders in Ex-Bereichen (d.h. in explosionsgefährdeten Bereichen) zu vermeiden gilt. Zur Vermeidung, dass bei dem An- und Abkoppeln der Verbindung 104 an den Messgerätebus 103 gefährliche Funken entstehen, die eine Explosion auslösen könnten, weist die Parametrieranordnung 105 eine Exschutzschaltung 106 auf. Die Exschutzschaltung 106 sorgt anschaulich für die physikalische Anpassung der Anpassungssignale der Parametrieranordnung 105 an die Signale des Messbus 103 und sorgt gleichfalls für die ausreichenden Schutzvorkehrungen zur Verwendung von zumindest einem Teil der Parametrieranordnung 105 bzw. der Verbindung 104 in einem Ex-Bereich.

Die Parametrierfunktionen werden von einer Parametriereinrichtung, die in Fig. 1 nicht gezeichnet ist, zur Verfügung gestellt. Dazu bietet die Parametrieranordnung 105 einen Anschluss 107 für ein Parametriergerät, beispielsweise einen PC oder ein PDA mit einer entsprechenden Software. Der Anschluss des externen Parametriergeräts an dem Interface 107 kann beispielsweise über eine USB-Schnittstelle oder über eine RS232-Schnittstelle erfolgen.

Fig. 2 zeigt ein detailliertes Blockschaltbild einer Messanordnung mit einer angeschlossenen Parametrieranordnung gemäß einem Ausführungsbeispiel der vorliegenden Erfindung.

Fig. 2 zeigt wiederum das Feldgerät 101, das über den Messgerätebus 103 mit dem Speisegerät 102 verbunden ist. Der Messgerätebus 103 ist in Fig. 2 als Zweidrahtbus dargestellt. Somit kann es sich um einen HART^{®}-Bus handeln. Mittels der Parametrieranordnung 105 bzw. Schaltkreis-Anordnung 105 soll die Parametriernutzinformation 201 auf den Messgerätebus 103 als Parametriernutzsignal 202 aufgekoppelt werden und an das Feldgerät 101 zu Parametrierungszwecken weitergeleitet werden. Dazu wird das Parametriernutzsignal 201 an dem Eingang 107 der Parametrieranordnung 105 eingespeist und über den Ausgang 209 der Parametrieranordnung 105 an den Messgerätebus 103 weitergeleitet. In Fig. 2 sind nur zwei Nutzdatenanschlüsse des Interface 107 dargestellt. Das Interface 107 kann weitere Anschlüsse wie eine Stromversorgungsleitung aufweisen.

Während in Fig. 2 nur der Nutzsignalfluss von Eingang 107 zum Ausgang 209 dargestellt ist, kann ein Nutzsignalfluss, beispielsweise ein Feedbacksignal von dem Feldgerät, auch in umgekehrter Richtung stattfinden. Ein Parametrierungsgerät wird an dem Eingang 107 der Parametrieranordnung 105 angeschlossen. Mittels einer Schnittstellenumwandlungseinrichtung 203 wird das Eingangssignal auf ein Bussignal an dem Ausgang 210 der Schnittstellenumwandlungseinrichtung 203 gewandelt. Die Schnittstellenumwandlungseinrichtung 203 weist eine galvanische Trennung auf (in Fig. 2 nicht gezeichnet).

Die Parametrieranordnung 105 ist mittels Leitungspaar 104 an die Busleitung 103 gekoppelt. Das Leitungspaar 104 verläuft zumindest teilweise in einem Ex-Bereich 212.

Das erste Strombegrenzungselement 205, das zweite Strombegrenzungselement 211 und die drei Dioden 204 dienen der Sicherstellung von Stromgrenzwerten, um einen Betrieb eines Teils der Parametrieranordnung 105 in einem Ex-Bereich zu ermöglichen, insbesondere um den Betrieb der Leitung 104 in einem Ex-Bereich zu ermöglichen. Das erste Strombegrenzungselement 205, das zweite Strombegrenzungselement 211 und die drei Dioden 204 können die Funktion einer Exschaltung 106 übernehmen. Die Strombegrenzungselemente 205, 211 und die Dioden 204 sichern die Gleichstromunterdrückung 206 oder Gleichstrom-Trennung 206 oder den Kondensator 206 ab. Der Kondensator 206 kann in einem Fehlerfall niederohmig werden. Das bedeutet, dass der Kondensator für Gleichstrom durchlässig wird und dem Gleichstrom nur einen ohmschen Widerstand entgegensetzt.

An dem Ausgang 210 der Schnittstellenumwandlungseinrichtung 203 liegen im Nutzsignalpfad Dioden 204. Obwohl in Fig. 1 drei Dioden 204 gezeichnet sind, können beliebig viele Dioden eingesetzt werden. Die Anzahl der Dioden ist von dem gewählten Schutzniveau abhängig. Bei einem Einsatz von drei Dioden 204 können zwei Dioden 204 ausfallen, ohne dass die Funktion der Dioden 204 verloren geht. Ein Ausfall einer Diode 204 bedeutet in diesem Zusammenhang, dass die Sperrfunktion der Diode 204 verloren geht und die Diode 204 niederohmig leitend wird.

Die Dioden 204 sind in Serienschaltung geschaltet. Die Kathode einer ersten Diode 204 ist mit dem Ausgang 210 der Schnittstellenumwandlungsschaltung 203 verbunden. Die Kathode einer zweiten Diode 204 ist mit der Anode der ersten Diode 204 verbunden. An der Anode der zweiten Diode 204 sind der Kurzschlussstrombegrenzungswiderstand 205 und die Gleichstrom- Trennung 206 bzw. der Kondensator 206 angeschlossen. Der Strombegrenzungswiderstand 205 verbindet den Potentialknoten 207 mit dem Massepotential. Ebenfalls an dem Verbindungspunkt 207 ist die positive Versorgungsspannung +Vss über Widerstand 211 angeschlossen. Die positive Versorgungsspannung +Vss versetzt die beiden Dioden 204 in einen leitenden Zustand, so dass ein Nutzsignal, das von dem Ausgang 210 der Spannungsumwandlungseinrichtung 203 kommt, an den Knoten 207 weitergeleitet wird. In dem in der Fig. 2 dargestellten Fall sind die Dioden leitend, da +Vss mit dem Knoten 207 über Widerstand 211 verbunden sind. In Fig. 2 nicht gezeichnet ist ein Schalter, insbesondere ein Transistor, der zwischen +Vss und Widerstand 211 angeordnet sein kann, wodurch die Dioden 204 erst leitend werden, wenn der Schalter eingeschalten ist und somit +Vss an dem Knoten 207 anliegt. Mittels des Schalters können z.B. die Dioden 204 in einen leitenden Zustand versetzt werden, wenn ein Signal zum Bus zu übertragen ist.

Mittels der Gleichstrom-Trennung 206 werden Gleichstromanteile aus dem Parametrierungsnutzsignal herausgefiltert, wodurch insbesondere verhindert wird, dass vor allem ein Gleichstrom, vom Bus in die Parametrieranordnung 105 fließt. Auf dem Weg von dem Ausgang 210 über die Dioden 204 und die Gleichstrom-Trennung 206 umgeht das Parametriernutzsignal den Widerstand 205 und den Widerstand 211. Dadurch kann der Strombegrenzungswiderstand 205 das Parametrierungsnutzsignal nicht beeinträchtigen. Die Störung des Parametrierungsnutzsignals wird somit vermieden. Über den Ausgang 209 der Parametrierungsanordnung 105 wird das Parametrierungsnutzsignal 202 an den Messgerätebus 103 bzw. das Feldgerät 101 weitergeleitet.

Zusätzlich zu dem Zustand der Signalübertragung im störungsfreien Szenario ist in Fig. 2 mittels des Kurzschlusses 208 der Störungsfall eines Kurzschlusses gestrichelt dargestellt. Im Falle eines Kurzschlusses 208 kommt es zu einer Entladung der Kapazität 206 über die Masseleitung.

Ein Kondensator gilt für den Exschutz als ein unsicheres Bauelement. Es kann vorkommen, dass im Fehler Fall der Kondensator 206 niederohmig wird. Ein von +Vss verursachter Strom könnte somit über die Leitung 104 zu dem Bus 103 oder zu dem Kurzschluss 208 fließen.

Im Kurzschlussfall entlädt sich die Kapazität 206 über den Widerstand 205. Der Widerstand 205 begrenzt auch den Kurzschlussstrom, der als Entladestrom der Kapazität 206 auftritt, auf einen im Ex-Bereich 212 zulässigen kleinen Strom. Dadurch kann die Parametrierungsanordnung 105 bzw. der Schnittstellenkonverter 105 auch an Leitungen angeschlossen werden, die in den Ex-Bereich führen. Bei einem Kurzschluss 208 und einem niederohmigen Kondensator 206 könnte es auch zu einem erhöhten Stromfluss durch den Ex-Bereich 212 von +Vss über den Widerstand 211, den Kondensator 206 und den Kurzschluss 208 zur Masse kommen. Dieser Strom wird von dem Widerstand 211 ausreichend gering gehalten, um die für den Ex-Bereich 212 zulässigen Wert nicht zu übersteigen. Folglich ist die Schalkreis-Anordnung 105 für den Betrieb in einem Ex-Bereich 212 angepasst.

Ein Ausfall der Dioden 204 ist dreifach abgesichert. Eine Erhöhung der Anzahl der Dioden 204 erhöht die Ausfallsicherheit. Die Dioden verhindern, dass ein Strom von dem Ausgang 310 der Schnittstellenwandlerschaltung 203 über die Gleichstrom-Trennung 206 fließt.

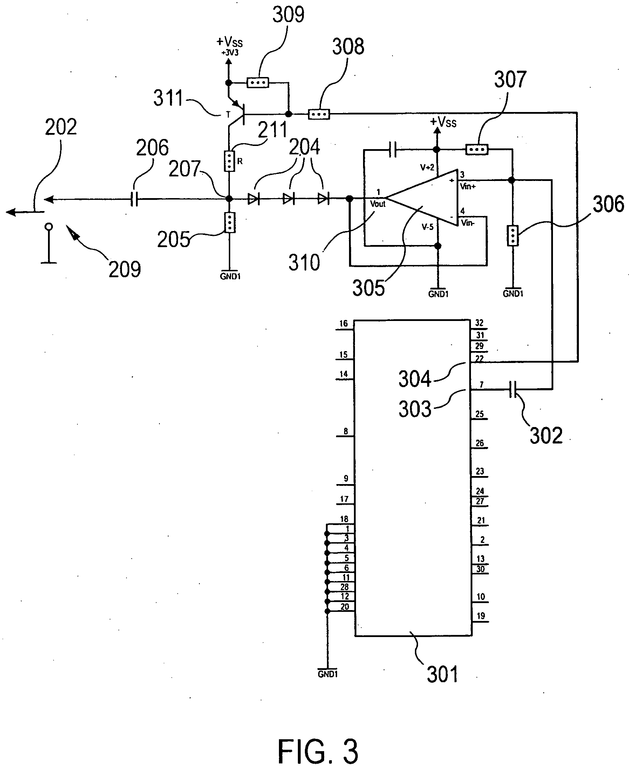

Fig. 3 zeigt ein Schaltbild einer Exschutzschaltung zur Ankopplung eines Nutzsignals an einen Messbus gemäß einem Ausführungsbeispiel der vorliegenden Erfindung.

Der HART^{®}-Bustreiberbaustein 301 stellt an seinem Ausgang 303 ein dem HART^{®}-Busprotokoll entsprechendes Ausgangssignal zur Verfügung. Dieses Ausgangssignal wird als Nutzsignal über die Kapazität 302 auf den Operationsverstärker 305 an den positiven Eingang weitergeleitet.

Bei dem an dem Ausgang 303 des Bausteins 301 zur Verfügung gestellten zu übertragenden Signal handelt es sich um ein Parametriersignal im HART^{®}-Busformat.

Das Signal ist an dieser Stelle FSK ("Frequency Shift Keying") moduliert. D. h. das Signal ist im Wesentlichen frei von Gleichstromanteilen.

Der Operationsverstärker 305 ist als Treiberbaustein in der Spannungsfolgeschaltung geschalten. In dieser Schaltungsart findet eine Impedanzanpassung einer hohen Impedanz am Eingang des Operationsverstärkers 305 zu einer geringen Impedanz am Ausgang des Operationsverstärkers 305 statt. Durch die hohe Eingangsimpedanz des Operationsverstärkers 305 wird der Ausgang 303 des integrierten Schaltkreises 301 nur gering belastet.

Über die Widerstände 306 und 307 in Spannungsteilerschaltung, die ebenfalls mit dem positiven Eingang des Operationsverstärkers 305 verbunden sind, wird ein fester Gleichspannungspegel dem positiven Eingang des Operationsverstärkers 305 zur Verfügung gestellt. Der Kondensator 302 filtert Gleichstromanteile aus dem an dem Ausgang 303 zur Verfügung gestellten FSK-Signal heraus. Das Wechselstromsignal wird auf das mittels der Spannungsteiler 307 und 306 erzeugte Gleichspannungssignal an dem positiven Eingang des Operationsverstärkers 305 aufmoduliert. An dem Ausgang 310 des Operationsverstärkers 305 steht ein Signal zur Verfügung, dem das Nutzsignal aufmoduliert wurde.

Die Weiterbehandlung dieses Signals ist nun von dem Zustand des Transistors 311 abhängig. Über den Pullup-Widerstand 309 ist die Basis des Transistors 311 auf einen von der Versorgungsspannung +Vss abhängigen Wert festgelegt. Über den Widerstand 308 sind die Basis des Transistors 311 und ein Anschluss des Widerstandes 309 mit dem Ausgang 304 des Bausteins 301 verbunden. Über den Ausgang 304 lässt sich ein Schaltsignal von einem Mikrocontroller anlegen und bestimmen, ob das Nutzsignal an den Ausgang 209 durchgeschalten werden soll. Um zu verhindern, dass in einem Fehlerfall zwischen +Vss und und Masse über den Kondensator 206 und Teile der Leitung 104 ein zu großer Strom fließt, begrenzt der Widerstand 211 den Strom.

Es lassen sich insbesondere zwei Fälle unterscheiden.

Liegt in einem ersten Fall an dem Ausgang 304 ein positiver Pegel an, so sperrt der Transistor 311. Dadurch liegt der Potential-Punkt 207 über den Widerstand 205 auf Masse-Potential an. Mit dem Punkt 207 ist die Anode einer der drei Dioden 204 verbunden. Die Dioden 204 sind in Serienschaltung hintereinander geschalten. Aufgrund des negativen Signalpegels am Punkt 207 gegenüber 310 sperren die Dioden 204. Eine Übertragung von dem Ausgang 310 des Operationsverstärkers 305 über die Dioden 204 ist nicht möglich, da kein Strom über die Dioden fließen kann, dem das Signal des Ausgangs 310 des Operationsverstärkers 301 aufmoduliert werden kann. An dem Ausgang 209 kann somit kein Ausgangssignal bzw. Nutzsignal 202 anliegen.

In einem zweiten Fall wird am Ausgang 304 ein negativer Signalpegel bereitgestellt. Durch die Bereitstellung dieses Signalpegels soll eine Nutzsignalübertragung über die Parametrieranordnung ermöglicht werden. Liegt am Ausgang 304 ein negativer Signalpegel an, gelangt dieser negative Signalpegel über den Widerstand 308 auf die Basis des Transistors 311, wodurch der Transistor 311 leitend wird. Dadurch kann die Versorgungsspannung +Vss über den Transistor 311 und den an den Kollektor des Transistors 311 angeschlossenen Widerstand an den Knotenpunkt 207 gelangen. Durch die nun positive Spannung an dem Knotenpunkt 207 gegenüber 310 werden die drei Dioden 204, bei einer Überschreitung der Summen-Durchbruchspannung der Dioden 204, in einen leitenden Zustand versetzt. Dadurch kann das über den Ausgang 303, die Kapazität 302 und den Operationsverstärker 305 an dem Ausgang 310 des Operationsverstärkers 305 anliegende Signal zu dem Knotenpunkt 207 gelangen. Dieses Signal enthält das aufmodulierte Parametriernutzsignal in HART^{®} Bus Kodierung. Das Nutzsignal gelangt an die Kapazität 206, durch welche eventuell vorhandene Gleichstromanteile aus dem Nutzsignal herausgefiltert werden.

Die Strombegrenzung 205 und die Strombegrenzung 211 werden bei dem direkten Weg über den Kondensator 206 zu dem Bus 103 von dem Nutzsignal umgangen, und über den Ausgang 209 kann das Parametriernutzsignal 202 an den HART^{®}-Bus weitergegeben werden.

Im Falle eines Kurzschlusses des Ausgangs 209 wird die Kapazität 206 über die Strombegrenzung 205 und den Strombegrenzungswiderstand 211 mit einem für den Ex-Bereich 212 ungefährlichen Strom entladen. Somit ist die in Fig. 3 angegebene Exschaltung zur Ankopplung bzw. Übertragung eines Nutzsignals bzw. eines Parametriersignals in einer explosionsgefährdeten Umgebung geeignet. Die Gefahr, dass bei dem Anschließen des Ausgangs 209 an einen Messsignalbus 103 ein gefährlicher Kurzschlussstrom durch das Kurzschließen der Anschlüsse des Ausganges 209 entsteht, ist somit reduziert.

Mittels des Widerstands 211 wird der Bus vor einem unzulässig hohen Strom aus der Parametrieranordnung 105 geschützt. Sollte der Kondensator 205 durch einen Defekt niederohmig werden, könnte ein unzulässiger Strom aus dem Ausgang 310 des Operationsverstärkers 305, über den Kondensator 206 und den Kurzschluss 208 zur Masse fließen, wenn durch einen Defekt alle drei Dioden 204 leitend in ihrer Sperrrichtung sind. Dabei gilt jedoch der gleichzeitige Ausfall aller drei Dioden als unwahrscheinlich im Bezug auf die Erfüllung von Exschutzanforderungen.

Die Strombegrenzung mittels Widerstand 211 verhindert einerseits einen zündfähigen Funken am Ausgang 209 bei einem Kurzschluss 208. Andererseits verhindert die Strombegrenzung mittels Widerstand 205 einen zu hohen Stromfluss auf die Bus-Leitung, der von +Vss verursacht wird. Die Bus-Leitung 103 kann in den Ex-Bereich 104 führen.

Die Parametrieranordnung selbst kann teilweise im Ex-Bereich 212 eingesetzt werden. Dabei wird die Parametrieranordnung bereits im Ex-Bereich 212 eingesetzt, wenn der Ausgang 209 in einem Ex-Bereich 212 liegt. Die Dioden werden für einen Nutzsignalfluss in Durchlassrichtung betrieben. Für eine Strombegrenzungsbetrachtung, zur Verhinderung eines ungewollten Stromes aus dem Operationsverstärker-Ausgang 310 heraus, findet ein Betrieb in Sperrrichtung statt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schaltkreis-Anordnung (105) für ein Feldgerät (101), wobei die Schaltkreis-Anordnung (105) aufweist:
einen Eingang (107);
einen Ausgang (209);
ein Strombegrenzungselement (205, 211); und
zumindest zwei Dioden (204), die in Serienschaltung geschaltet sind;
wobei die Schaltkreis-Anordnung (105) ausgebildet ist, ein Nutzsignal entlang eines Nutzsignalpfades vom Eingang (107) zum Ausgang (209) zu übertragen;
wobei die Dioden (204) im Nutzsignalpfad verschaltet sind;
wobei der Eingang (107) und der Ausgang (209) voneinander mittels einer Gleichstrom-Trennung (206) getrennt sind;
wobei das Strombegrenzungselement (205, 211) außerhalb des Nutzsignalpfades angeordnet ist;
wobei eine Anode einer ersten Diode der Serienschaltung der Dioden (204) mit der Kathode einer zweiten Diode der Serienschaltung der Dioden (204) verbunden ist; und
wobei eine Anode der zweiten Diode an dem Strombegrenzungselement (205, 211) und an der Gleichstrom-Trennung (206) angeschlossen ist.

2. Schaltkreis-Anordnung (105) nach Anspruch 1,
wobei der Ausgang (209) zum Anschluss an einen Bus (103) ausgebildet ist.

3. Schaltkreis-Anordnung (105) nach Anspruch 2,
wobei der Ausgang (209) zum Anschluss an einen Bus (103) ausgebildet ist, der ausgewählt ist aus der Gruppe bestehend aus einem HART^{®}-Bus und einem I2C Bus.

4. Schaltkreis-Anordnung (105) nach Anspruch 1 oder 2,
wobei der Ausgang (209) zweidrahtig ausgebildet ist.

5. Schaltkreis-Anordnung (105) nach einem der Ansprüche 1 bis 4,
ausgebildet zur teilweisen Verwendung in einem explosionsgefährdeten Bereich (212).

6. Schaltkreis-Anordnung (105) nach einem der Ansprüche 1 bis 5;
wobei der Eingang (107) ausgewählt ist aus der Gruppe bestehend aus einem Universal Serial Bus Anschluss und einem RS232 Anschluss.

7. Schaltkreis-Anordnung (105) nach einem der Ansprüche 1 bis 6;
wobei das Nutzsignal ein Parametriersignal für das Feldgerät (101) ist, welches Feldgerät (101) ausgewählt ist aus der Gruppe bestehend aus einem Füllstandsmessgerät und einem Druckmessgerät.

8. Schaltkreis-Anordnung (105) nach einem der Ansprüche 1 bis 7,
aufweisend eine Kapazität, die zur Gleichstrom-Trennung (206) des Eingangs (107) von dem Ausgang (209) verschaltet ist.

9. Schaltkreis-Anordnung (105) nach einem der Ansprüche 1 bis 8,
wobei das zumindest eine Strombegrenzungselement (205, 211) einen ohmschen Widerstand aufweist.

10. Schaltkreis-Anordnung (105) nach Anspruch 9,
wobei der ohmsche Widerstand zwischen dem Nutzsignalpfad und einem elektrischen Referenzpotential der Schaltkreis-Anordnung (105) angeordnet ist.

11. Schaltkreis-Anordnung (105) nach einem der Ansprüche 1 bis 10,
eingerichtet als Parametrieranordnung (105) mit Explosionsschutz (106).

12. Schaltkreis-Anordnung (105) nach einem der Ansprüche 1 bis 11,
wobei das Nutzsignal ein Messsignal das Feldgeräts (101) ist.

13. Feldgerät (101) mit einer Schaltkreis-Anordnung (105) nach einem der Ansprüche 1 bis 12.

14. Feldgerät (101) nach Anspruch 13,
ausgewählt aus der Gruppe bestehend aus einem Füllstandsmessgerät und einem Druckmessgerät.

15. Verfahren zum Betreiben einer Schaltkreis-Anordnung (105) für ein Feldgerät (101), wobei das Verfahren aufweist:
Übertragen eines Nutzsignals entlang eines Nutzsignalpfades von einem Eingang (107) zu einem Ausgang (209) der Schaltkreis-Anordnung (105);
wobei in dem Nutzsignalpfad zumindest zwei Dioden (204) in Serienschaltung verschaltet sind;
wobei der Eingang (107) von dem Ausgang (209) mittels einer Gleichstrom-Trennung (206) getrennt ist; und
wobei ein Strombegrenzungselement (205, 211) in der Schaltkreis-Anordnung (105) und außerhalb des Nutzsignalpfades angeordnet ist;
wobei eine Anode einer ersten Diode der Serienschaltung der Dioden (204) mit der Kathode einer zweiten Diode der Serienschaltung der Dioden (204) verbunden ist; und
wobei eine Anode der zweiten Diode an dem Strombegrenzungselement (205, 211) und an der Gleichstrom-Trennung (206) angschlossen ist.

## Claims

1. A circuit arrangement (105) for a field device (101), wherein the circuit arrangement (105) comprises:
an input (107);
an output (209);
a current-limiting element (205, 211);
at least two diodes (204), which are connected in form of a serial connection;
wherein the circuit arrangement (105) is designed to transmit a useful signal along a useful-signal path from the input (107) to the output (209);
wherein the diodes (204) are wired in the useful-signal path;
wherein the input (107) and the output (209) are separated from each other by means of direct-current separation (206);
wherein the current-limiting element (205, 211) is arranged outside the useful-signal path;
wherein an anode of a first diode of the serial connection of diodes (204) is connected to a cathode of a second diode of the serial connection of diodes (204); and
wherein an anode of the second diode is connected to the current-limiting element (205, 211) and to the direct-current separation (206).

2. The circuit arrangement (105) of claim 1,
wherein the output (209) is designed for connection to a bus (103).

3. The circuit arrangement (105) of claim 2,
wherein the output (209) is designed for connection to a bus (103) that is selected from the group comprising a HART^{®} bus and an I2C bus.

4. The circuit arrangement (105) of claim 1 or 2,
wherein the output (209) comprises two wires.

5. The circuit arrangement (105) of any one of claims 1 to 4,
designed for partial use in a potentially explosive environment (212).

6. The circuit arrangement (105) of any one of claims 1 to 5;
wherein the input (107) is selected from the group comprising a Universal Serial Bus connection and an RS232 connection.

7. The circuit arrangement (105) of any one of claims 1 to 6;
wherein the useful signal is a parameterisation signal for the field device (101), which field device (101) is selected from the group comprising a fill level measuring device and a pressure measuring device.

8. The circuit arrangement (105) of any one of claims 1 to 7,
comprising a capacitor which is wired for direct-current separation (206) of the input (107) from the output (209).

9. The circuit arrangement (105) of any one of claims 1 to 8,
wherein the at least one current-limiting element (205, 211) comprises an ohmic resistance.

10. The circuit arrangement (105) of claim 9,
wherein the ohmic resistance is arranged between the useful-signal path and an electrical reference potential of the circuit arrangement (105).

11. The circuit arrangement (105) of any one of claims 1 to 10,
designed as a parameterisation arrangement (105) with explosion protection (106).

12. The circuit arrangement (105) of any one of claims 1 to 11,
wherein the useful signal is a measuring signal of the field device (101).

13. A field device (101) with a circuit arrangement (105) of any one of claims 1 to 12.

14. The field device (101) of claim 13,
selected from the group comprising a fill level measuring device and a pressure measuring device.

15. A method for operating a circuit arrangement (105) for a field device (101), wherein the method comprises:
transmitting a useful signal along a useful-signal path from an input (107) to an output (209) of the circuit arrangement (105);
wherein at least two diodes (204) are connected in form of a serial connection in the useful-signal path;
wherein the input (107) is separated from the output (209) by means of direct-current separation (206); and
wherein a current-limiting element (205, 211) is arranged in the circuit arrangement (105) and outside the useful-signal path;
wherein an anode of a first diode of the serial connection of diodes (204) is connected to a cathode of a second diode of the serial connection of diodes (204); and
wherein an anode of the second diode is connected to the current-limiting element (205, 211) and to the direct-current separation (206).

## Revendications

1. Agencement de circuit de commutation (105) pour un appareil de champ (101), l'agencement de circuit de commutation (105) présentant :
une entrée (107) ;
une sortie (209) ;
un élément de limitation de courant (205, 211) ; et
au moins deux diodes (204), montées en série ;
l'agencement de circuit de commutation (105) étant réalisé pour transmettre de l'entrée (107) à la sortie (209) un signal utile le long d'un cheminement de signaux utiles ;
les diodes (204) étant imbriquées dans le cheminement de signaux utiles ;
l'entrée (107) et la sortie (209) étant séparées l'une de l'autre au moyen d'une séparation de courant continu (206) ;
l'élément de limitation de courant (205, 211) étant disposé à l'extérieur du cheminement de signaux utiles ;
une anode d'une première diode du montage en série des diodes (204) étant reliée à la cathode d'une seconde diode du montage en série des diodes (204) ; et
une anode de la seconde diode étant raccordée à l'élément de limitation de courant (205, 211) et à la séparation de courant continu (206).

2. Agencement de circuit de commutation (105) selon la revendication 1,
la sortie (209) étant réalisée pour la jonction à un bus (103) .

3. Agencement de circuit de commutation (105) selon la revendication 2,
la sortie (209) étant réalisée pour la jonction à un bus (103), sélectionné parmi le groupe constitué d'un bus HART® et d'un bus I2C.

4. Agencement de circuit de commutation (105) selon l'une des revendications 1 et 2,
la sortie (209) ayant une réalisation bifilaire.

5. Agencement de circuit de commutation (105) selon l'une des revendications 1 à 4,
réalisé pour l'utilisation partielle dans une zone soumise à des risques d'explosions (212).

6. Agencement de circuit de commutation (105) selon l'une des revendications 1 à 5 ;
l'entrée (107) étant sélectionnée parmi le groupe constitué d'une jonction Universal Serial Bus et d'une jonction RS232.

7. Agencement de circuit de commutation (105) selon l'une des revendications 1 à 6 ;
le signal utile étant un signal de paramétrage pour l'appareil de champ (101), lequel appareil de champ (101) est sélectionné parmi le groupe constitué d'un appareil de mesure de niveau et d'un appareil de mesure de pression.

8. Agencement de circuit de commutation (105) selon l'une des revendications 1 à 7,
présentant une capacité imbriquée pour la séparation de courant continu (206) entre l'entrée (107) et la sortie (209).

9. Agencement de circuit de commutation (105) selon l'une des revendications 1 à 8,
le au moins un élément de limitation de courant (205, 211) présentant une résistance ohmique.

10. Agencement de circuit de commutation (105) selon la revendication 9,
la résistance ohmique étant disposée entre le cheminement de signaux utiles et un potentiel de référence électrique de l'agencement de circuit de commutation (105).

11. Agencement de circuit de commutation (105) selon l'une des revendications 1 à 10, conçu sous forme d'agencement de paramétrage (105) avec protection contre les explosions (106).

12. Agencement de circuit de commutation (105) selon l'une des revendications 1 à 11, le signal utile étant un signal de mesure de l'appareil de champ (101).

13. Appareil de champ (101) avec un agencement de circuit de commutation (105) selon l'une des revendications 1 à 12.

14. Appareil de champ (101) selon la revendication 13, sélectionné parmi le groupe constitué d'un appareil de mesure de niveau et d'un appareil de mesure de pression.

15. Procédé de fonctionnement d'un agencement de circuit de commutation (105) pour un appareil de champ (101), le procédé comprenant :
la transmission d'un signal utile le long d'un cheminement de signaux utiles d'une entrée (107) à une sortie (209) de l'agencement de circuit de commutation (105) ;
au moins deux diodes (204) étant imbriquées en série dans le cheminement de signaux utiles ;
l'entrée (107) étant séparée de la sortie (209) au moyen d'une séparation de courant continu (206); et
un élément de limitation de courant (205, 211) étant disposé dans l'agencement de circuit de commutation (105) et à l'extérieur du cheminement de signaux utiles ;
une anode d'une première diode du montage en série des diodes (204) étant reliée à la cathode d'une seconde diode du montage en série des diodes (204) ; et
une anode de la seconde diode étant raccordée à l'élément de limitation de courant (205, 211) et à la séparation de courant continu (206).
